# EUROPEAN PATENT APPLICATION

(11) **EP 4 415 117 A2**
(43) Date of publication of application: **14.08.2024**
(21) Application number: 23213224.1
(22) Date of filing: 30.11.2023
(51) Int. Cl.: H01M 50/103, H01M 50/15, H01M 50/30, H01M 50/471, H01M 50/533, H01M 50/536, H01M 50/55, H01M 50/553

(54) **ENERGY-STORAGE DEVICE AND ELECTRICITY-CONSUMPTION DEVICE**

(30) Priority: 09.02.2023 CN 202310091060
(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361100 (CN)
(72) Inventor: XIONG, Yongfeng, Shenzhen, 518110 (CN); CHEN, Jinqiang, Shenzhen, 518110 (CN)
(74) Representative: Viering, Jentschura & Partner mbB Patent- und Rechtsanwälte

(57) **Abstract**

An energy-storage apparatus and an electricity-consumption device are provided in the disclosure. The energy-storage apparatus includes a terminal post, a tab, and a connector. The connector includes multiple connection pieces, where the multiple connection pieces are in a stacked shape before and after being folded. Each of the multiple connection pieces includes a first connection portion and a second connection portion, and the first connection portion is opposite to the second connection portion after the connection piece is folded. The first connection portion is electrically connected to the terminal post, and the second connection portion is electrically connected to the tab. The tab is sandwiched between two adjacent second connection portions. An area ratio of the first connection portion to the second connection portion ranges from 1/5 to 4/5; and/or the first connection portion and the second connection portion partially overlap after the connector is folded, an area of an overlapping portion between the first connection portion and the second connection portion is S1, an area of the second connection portion is S2, S1 :S2 = 58% - 98%; and/or the multiple connection pieces overlap by at least 58% in a stacking direction. With the above apparatus, the connector of the energy-storage apparatus can have high strength and thus is not easily broken and can be stably connected to the tab, therefore, the energy-storage apparatus has high reliability.

## Description

### TECHNICAL FIELD

This disclosure relates to the field of energy-storage technology, and in particular, to an energy-storage apparatus and an electricity-consumption device.

### BACKGROUND

Energy-storage apparatuses can be configured to store energy and release energy when required. Current energy-storage apparatuses are mainly rechargeable secondary batteries. At present, a common secondary battery mainly includes a housing, an electrode assembly, and a cover assembly. The electrode assembly is received in the housing. The housing is sealed by the cover assembly. A tab of the electrode assembly is connected to a terminal post on the cover assembly via a connector.

The current energy-storage apparatus suffers from poor electrical connection.

### SUMMARY

An energy-storage apparatus and an electricity-consumption device are provided in the disclosure, which aim to solve a problem of poor electrical connection.

To achieve the purpose of the disclosure, the disclosure provides the following technical solutions.

In a first aspect, an energy-storage apparatus is provided in the disclosure. The energy-storage apparatus includes a terminal post, a tab, and a connector. The connector includes multiple connection pieces, where the multiple connection pieces are in a stacked shape before and after being folded. Each of the multiple connection pieces includes a first connection portion and a second connection portion, and the first connection portion is opposite to the second connection portion after the connection piece is folded. The first connection portion is electrically connected to the terminal post, and the second connection portion is electrically connected to the tab. The tab is sandwiched between two adjacent second connection portions. Each connection piece satisfies at least one of: an area ratio of the first connection portion to the second connection portion ranges from 1/5 to 4/5; the first connection portion and the second connection portion partially overlap after the connector is folded, an area of an overlapping portion between the first connection portion and the second connection portion is S1, an area of the second connection portion is S2, S1 :S2 = 58% - 98%; or the multiple connection pieces overlap by at least 58% in a stacking direction. Each connection piece further includes a bendable portion, where one end of the bendable portion is connected to the first connection portion, another end of the bendable portion is connected to the second connection portion, and the bendable portion is foldable along a crease. The bendable portion has a first side-surface and a second side-surface opposite the first side-surface, where two ends of the first side-surface are connected to the first connection portion and the second connection portion, respectively, two ends of the second side-surface are connected to the first connection portion and the second connection portion, respectively, and the first side-surface and the second side-surface are flush with each other and both in a shape of an outwardly convex arc after the connector is folded.

The connector is set to be foldable, which facilities assembling of the energy-storage apparatus. The connector includes the multiple connection pieces stacked, and the connector is not easily broken during folding of the connector since the multiple connection pieces have relatively high structural strength. The tab is tightly sandwiched between two adjacent connection pieces, and in this way, each of two opposite surfaces of the tab is welded to one connection piece, thereby reducing occurrence of pseudo soldering. As such, the connector of the energy-storage apparatus can have high strength and thus is not easily broken and can be stably connected to the tab, therefore, the energy-storage apparatus has high reliability. With the ratios above, the multiple connection pieces can be in a reasonable structure and size, and the first connection portion and the second connection portion of each connection piece can be in a reasonable structure and size, thereby meeting requirements of electrical connection and achieving good connection.

In an implementation, the connection piece further includes a bendable portion. One end of the bendable portion is connected to the first connection portion, another end of the bendable portion is connected to the second connection portion, and the bendable portion is foldable along a crease. With the bendable portion that can be foldable along the crease, the connector can have a simple structure and can be folded. With the bendable portion separately provided, difficulties in processing and manufacturing as well as assembling can be reduced.

In an implementation, the bendable portion has a first side-surface and a second side-surface opposite the first side-surface. Two ends of the first side-surface are connected to the first connection portion and the second connection portion, respectively, and two ends of the second side-surface are connected to the first connection portion and the second connection portion, respectively. The first side-surface defines a first recess, and the first side-surface is connected to the crease at a deepest position of the first recess. The first recess is defined on the first side-surface, and the first side-surface is connected to the crease at the deepest position of the first recess, so that the bendable portion is relatively smooth at a bendable position. As such, in the first aspect, a folding position can be easily determined, i.e., the deepest position of the first recess serves as a folding point, i.e., the first recess achieves a positioning function; in the second aspect, the bendable portion is relatively smooth at the bendable position of the bendable portion, so that components such as a cell and a tab can be prevented from being scratched, thereby improving security; in the third aspect, when the cell generates gas, since the bendable portion is relatively smooth at the bendable position of the bendable portion, it facilitates gas flow and gas blocking can be reduced.

In an implementation, the first recess has a first sidewall and a second sidewall that are symmetric along the crease. One end of the first sidewall and one end of the second sidewall are connected at the crease, and another end of the first sidewall and another end of the second sidewall are connected to the first side-surface. As such, the first sidewall can be flush with the second sidewall after the connection piece is folded, thereby forming an integral and smooth bendable-structure.

In an implementation, the first sidewall is in a shape of an outwardly convex arc towards the second sidewall, thereby forming a smooth bendable-structure at the bendable portion after the connection piece is folded.

In an implementation, the first sidewall is tangent to the first side-surface, so that the first sidewall and the second side-surface are in smooth connection to form a relatively smooth bendable-structure.

In an implementation, the second side-surface defines a second recess. The second side-surface is connected to the crease at a deepest position of the second recess. Similar to the function of the first recess, with the second recess, the effect in the foregoing three aspects can also be achieved.

In an implementation, the first connection portion is connected to another adjacent connection piece at an edge of the first connection portion away from the bendable portion. The multiple connection pieces are connected to form an integral component, thereby facilitating management and assembling.

In an implementation, two adjacent edges of the first connection portion are in smooth transition connection, and/or two adjacent edges of the second connection portion are in smooth transition connection. With the smooth transition connection, a sharp-corner portion can be avoided, thereby preventing components such as a cell and a tab from being scratched, thereby improving security.

In an implementation, the multiple connection pieces are integrally formed, and thus structural strength can be improved and no additional connection member is needed, thereby saving components and reducing costs.

In an implementation, the energy-storage apparatus further includes an insulation holder and an insulation adhesive film. The insulation holder includes a first side and a second side opposite the first side. The insulation holder defines a mounting hole. The connector is disposed at the first side. The terminal post extends into the mounting hole from the first side and extends to the second side. The insulation adhesive film is disposed between the first connection portion folded and the second connection portion folded, and the insulation adhesive film is tightly pressed between a surface of the second connection portion facing the first connection portion and a surface of the first side of the insulation holder. With the insulation adhesive film, insulation between the second connection portion and a response member can be improved, and debris can be prevented from entering the response member through an air vent, thereby avoiding a short circuit.

In an implementation, the insulation holder further defines an air vent. The mounting hole and the air vent are arranged at intervals in a length direction of the insulation holder. The insulation adhesive film partially covers the air vent. The insulation adhesive film covers part of the air vent, and at least a gap is required to be defined between the insulation adhesive film and an inner wall of the air vent, so that gas generated by the cell can flow into the air vent through the gap and flow to the response member, so that the response member can be turned over to achieve overcharge protection.

In an implementation, a grid is disposed at a sidewall of the air vent. The air vent is separated into multiple air vents through the grid. The grid is tightly pressed by the insulation adhesive film. The grid is tightly pressed by the insulation adhesive film, thereby improving connection of the insulation adhesive film at the air vent, and blocking debris from entering the response member. A surface of the second connection portion that is close to and faces the grid may be relatively flat, which can protect the grid and prevent solder bump and the like generated during welding of a negative tab to the second connection portion from colliding the grid, thereby preventing the grid from being damaged. Similar to the function of the insulation adhesive film, i.e., blocking debris, a side of the second connection portion close to the grid can block debris from entering a side of the response member through the air vent, thereby avoiding a short circuit. In this way, in some implementations, the insulation adhesive film may not be disposed. The grid is arranged to separate the air vent into multiple air vents with a reduced size, and thus relatively large debris can be prevented from passing through the air vents.

In a second aspect, an electricity-consumption device is further provided in the disclosure. The electricity-consumption device includes the energy-storage apparatus of any one of the foregoing implementations in the first aspect. The energy-storage apparatus is configured to supply power to the electricity-consumption device.

### BRIEF DESCRIPTION OF THE DRAWINGS

In order to describe technical solutions in implementations of the disclosure or in the related art more clearly, the following will give a brief introduction to accompanying drawings required for describing implementations or the related art. Apparently, the accompanying drawings hereinafter described merely illustrate some implementations of the disclosure. Based on these drawings, those of ordinary skills in the art can also obtain other drawings without creative effort.
FIG. 1 is a perspective view of an energy-storage apparatus in an implementation.
FIG. 2 is an exploded view of an energy-storage apparatus in an implementation.
FIG. 3 is a perspective view of a portion of an energy-storage apparatus in an implementation.
FIG. 4 is a perspective view of a negative connector folded in an implementation.
FIG. 5 is a top view of a negative connector folded in an implementation of the disclosure.
FIG. 6 is a perspective view of a negative connector unfolded in an implementation.
FIG. 7 is a top view of a negative connector unfolded in an implementation.
FIG. 8 is a top view of a portion of an energy-storage apparatus in an implementation.

Illustration of reference signs in the accompanying drawings:
10 - housing, 20 - cell, 21 - positive tab, 22 - negative tab, 30 - insulation holder, 31 - first side, 32 - second side, 33 - mounting hole, 34 - air vent, 35 - grid, 40 - negative terminal post, 41 - cylinder, 42 - connection flange, 43 - sealing ring, 50 - negative connector, 51 - first connection portion, 52 - second connection portion, 53 - bendable portion, 531 - first side-surface, 532 - second side-surface, 54 - crease, 501 - first recess, 502 - second recess, 55 - edge connection portion, 56 - first sidewall, 57 - second sidewall, 58 - third sidewall, 59 - fourth sidewall, 60 - insulation adhesive film, 61 - first insulation adhesive film, 62 - second insulation adhesive film, 70 - response member, 80 - smooth aluminum piece, 81 - explosion-proof valve, 90 - positive terminal post, 95 - positive connector, 100 - energy-storage apparatus.

### DETAILED DESCRIPTION

The following will illustrate clearly and completely technical solutions of implementations of the disclosure with reference to accompanying drawings of implementations of the disclosure. Apparently, implementations illustrated herein are merely some, rather than all implementations, of the disclosure. Based on the implementations of the disclosure, all other implementations obtained by those of ordinary skill in the art without creative effort shall fall within the protection scope of the disclosure.

It is to be noted that, when a component (element or member) is referred to as being "fixed" or "secured" to another component (element or member), the component (element or member) can be directly on the other component (element or member) or there may be an intermediate component (element or member) between the two components (elements or members). When a component (element or member) is considered to be "connected" or "coupled" to another component (element or member), the component (element or member) may be directly connected or coupled to the other component (element or member) or there may be an intermediate component (element or member) between the two components (elements or members).

Unless otherwise defined, all technical and scientific terms used herein have the same meaning as commonly understood by those skilled in the art of the disclosure. The terms used herein in the disclosure are for the purpose of describing specific implementations only and are not intended to limit the disclosure. The term "and/or" used herein includes any and all combinations of one or more related listed items.

The following will describe in detail some implementations of the disclosure with reference to the accompanying drawings. The following implementations and features in the implementations can be combined with each other without conflict.

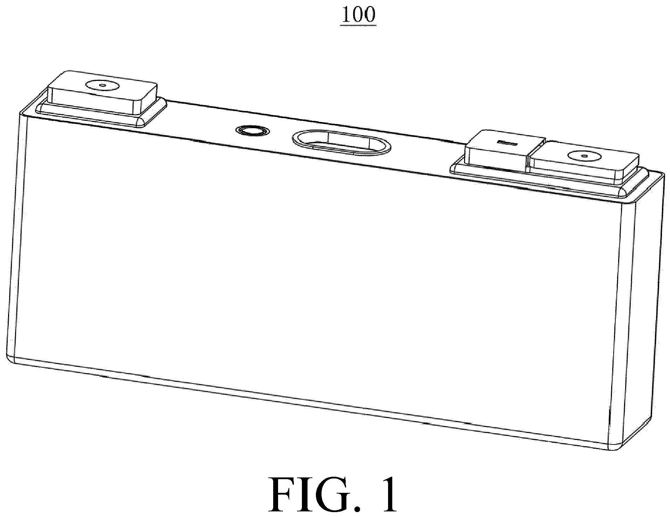

Referring to FIGs. 1 to 3, an energy-storage apparatus 100 is provided in implementations of the disclosure. The energy-storage apparatus 100 includes a housing 10, an electrode assembly, a connector, and a cover assembly.

The electrode assembly is received in the housing 10. The electrode assembly includes a cell 20 and a tab. The cell 20 includes a positive electrode piece (not shown), a separator (not shown), and a negative electrode piece (not shown) that are stacked. The tab includes a positive tab 21 and a negative tab 22. The positive tab 21 is connected to the positive electrode piece, and the negative tab 22 is connected to the negative electrode piece.

The connector includes a positive connector 95 and a negative connector 50. The positive connector 95 is connected to the positive tab 21, and the negative connector 50 is connected to the negative tab 22. A structure of the positive connector 95 may be substantially the same as that of the negative connector 50. The positive connector 95 and the negative connector 50 each can be made of metal. The positive connector 95 can be made of aluminum for example. The negative connector 50 can be made of copper or a copper-aluminum alloy for example.

The cover assembly includes an insulation holder 30, a terminal post, a smooth aluminum piece 80, a response member 70, etc. The terminal post includes a positive terminal post 90 and a negative terminal post 40. The positive terminal post 90 is fixedly installed to the insulation holder 30 at a positive-electrode side, and the negative terminal post 40 is fixedly installed to the insulation holder 30 at a negative-electrode side. The positive terminal post 90 is connected to the positive connector 95, and the negative terminal post 40 is connected to the negative connector 50.

A structure at the positive-electrode side is substantially the same as a structure at the negative-electrode side, and the structure at the negative-electrode side will be described below for illustration.

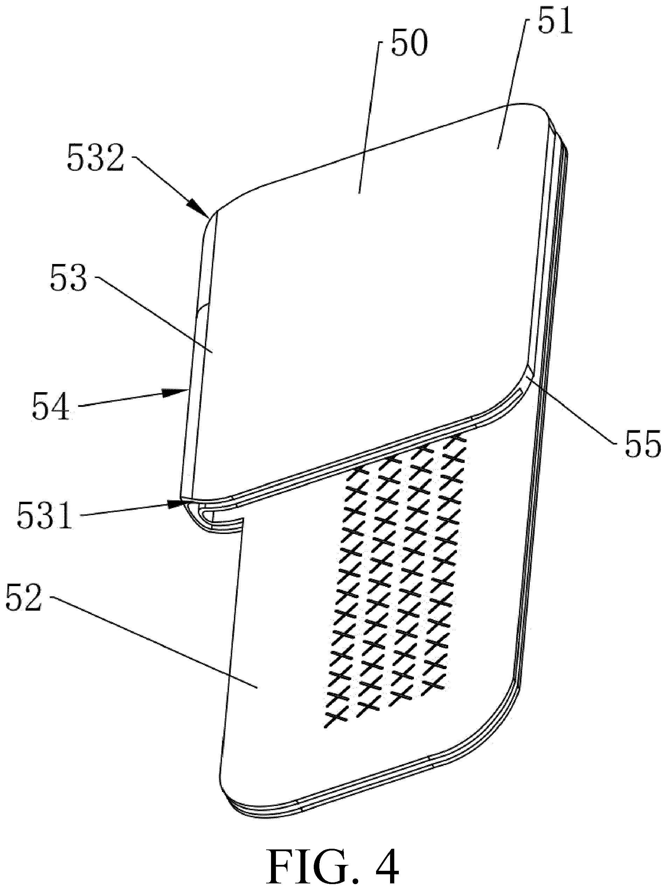

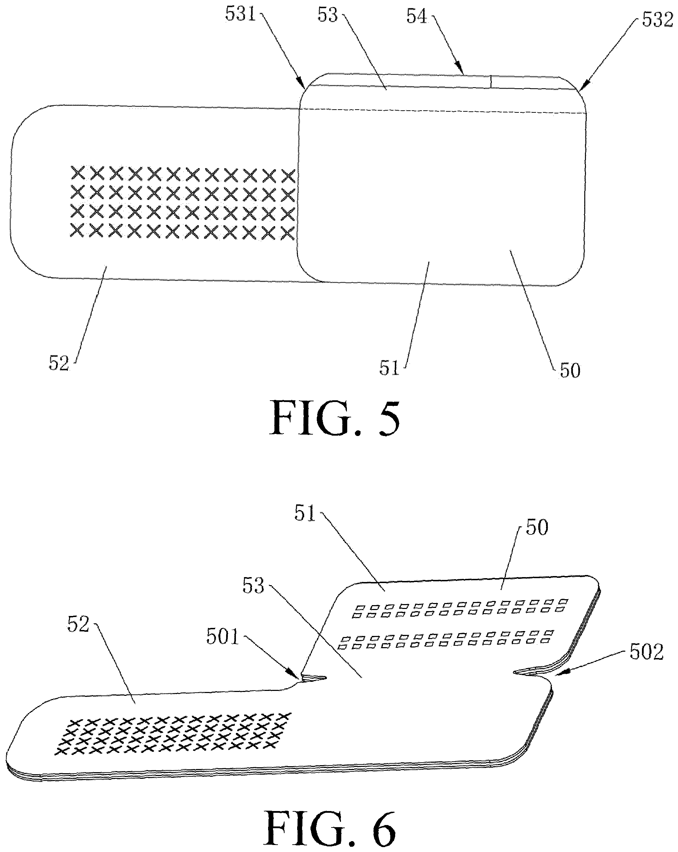

Referring to FIGs. 4 and 6, the negative connector 50 is foldable and includes multiple connection pieces. The multiple connection pieces each are foldable. The multiple connection pieces are in a stacked shape before and after being folded. In other words, the multiple connection pieces have substantially the same structure. Before being folded, the multiple connection pieces are sequentially stacked layer-by-layer. During folding, the stacked multiple connection pieces as a whole are folded, and the multiple connection pieces are still of the stacked structure after being folded. The number of the connection pieces may be 2, 3, 4, .... For example, FIGs. 4 and 6 illustrate an implementation in which two connection pieces are provided.

Each connection piece includes a first connection portion 51 and a second connection portion 52, and the first connection portion 51 is opposite to the second connection portion 52 after the connection piece is folded.

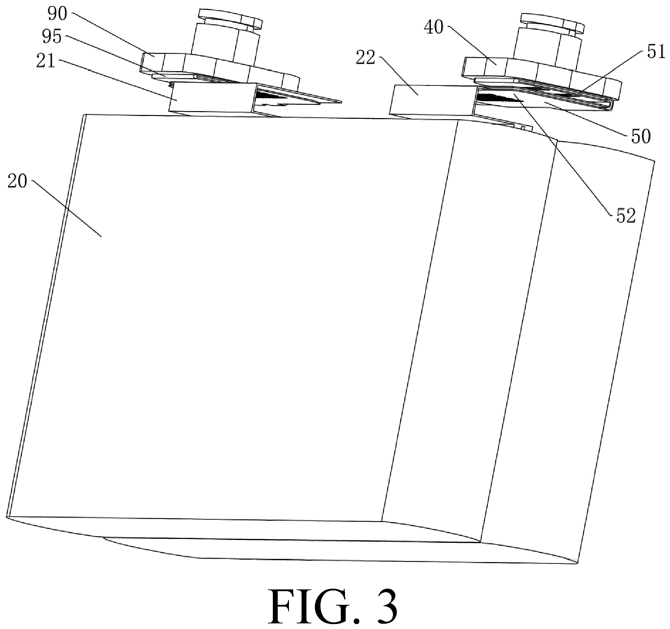

Referring to FIG. 3, the first connection portion is electrically connected to the terminal post, and the second connection portion is electrically connected to the tab. Specifically, a first connection portion (reference may be made to the first connection portion 51 of the negative connector 50) of the positive connector 95 is connected to the positive terminal post 90, and the first connection portion 51 of the negative connector 50 is connected to the negative terminal post 40. The connection manner may specifically be welding, and further may be laser welding. A second connection portion (reference may be made to the second connection portion 52 of the negative connector 50) of the positive connector 95 is connected to the positive tab 21, and the second connection portion 52 of the negative connector 50 is connected to the negative tab 22. The connection manner may specifically be welding, and further may be ultrasonic welding.

The negative tab 22 is sandwiched between two adjacent second connection portions 52. Specifically, to weld the negative tab 22 to the second connection portions 52, two adjacent second connection portions 52 can be separated, and then the negative tab 22 is inserted between the two adjacent second connection portions 52. Then, the two adjacent second connection portions 52 are tightly attached to two opposite surfaces of the negative tab 22, respectively, and then the two adjacent second connection portions 52 are fixed to the negative tab 22 through welding, respectively.

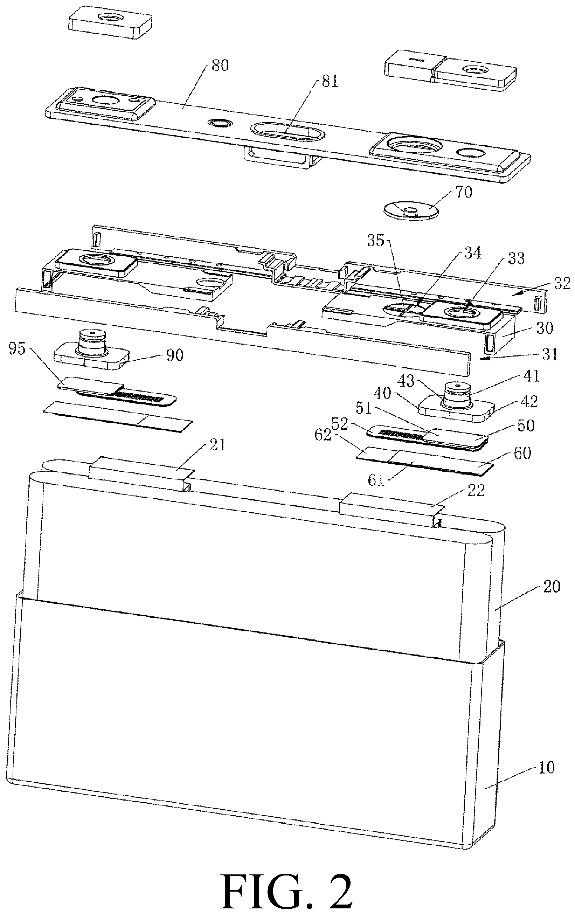

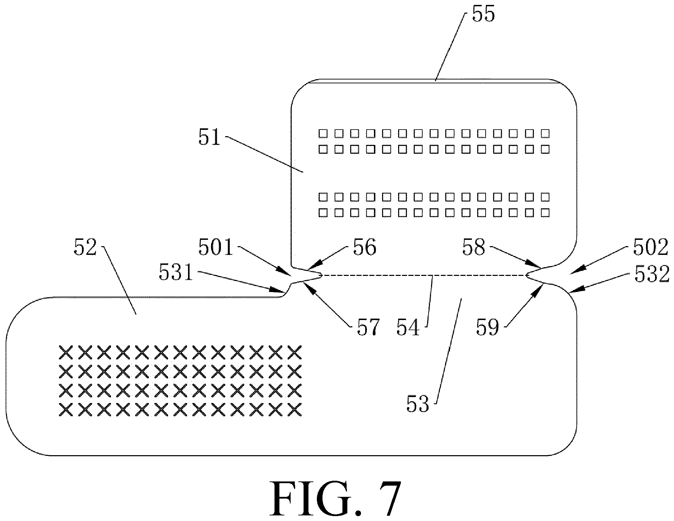

During assembling of the energy-storage apparatus 100, the negative connector 50 is set to be in an unfolded state as illustrated in FIGs. 6 and 7, and in this case, the cover assembly does not cover the housing 10 of the energy-storage apparatus 100. After the first connection portion 51 is fixed to the negative terminal post 40 through welding and the second connection portion 52 is fixed to the negative tab 22 through welding, the first connection portion 51 and the second connection portion 52 are folded, and other components, such as the insulation holder 30, the response member 70, the negative terminal post 40, and the smooth aluminum piece 80, of the cover assembly are turned over synchronously, until the first connection portion 51 and the second connection portion 52 are in a folded state in which the first connection portion 51 is folded relative to the second connection portion 52 as illustrated in FIGs. 2 to 4. In this case, the cover assembly also faces the cell 20, so that the cover assembly covers an opening of the housing 10 to seal the cell 20.

The structure of the positive connector 95 is substantially the same as that of the negative connector 50, and reference may be made to the structure of the negative connector 50, which will not be repeated herein.

In implementations of the disclosure, the connector is set to be foldable, which facilities assembling of the energy-storage apparatus 100. The connector includes the multiple connection pieces stacked, and the connector is not easily broken during folding of the connector since the multiple connection pieces have relatively high structural strength. The tab is tightly sandwiched between two adjacent connection pieces, and in this way, each of two opposite surfaces of the tab is welded to one connection piece, thereby reducing occurrence of pseudo soldering. As such, the connector of the energy-storage apparatus 100 can have high strength and thus is not easily broken and can be stably connected to the tab, therefore, the energy-storage apparatus 100 has high reliability.

Optionally, two adjacent edges of the first connection portion 51 are in smooth transition connection, and/or two adjacent edges of the second connection portion 52 are in smooth transition connection. With the smooth transition connection, a sharp-corner portion can be avoided, thereby preventing components such as a cell 20 and a tab from being scratched, thereby improving security.

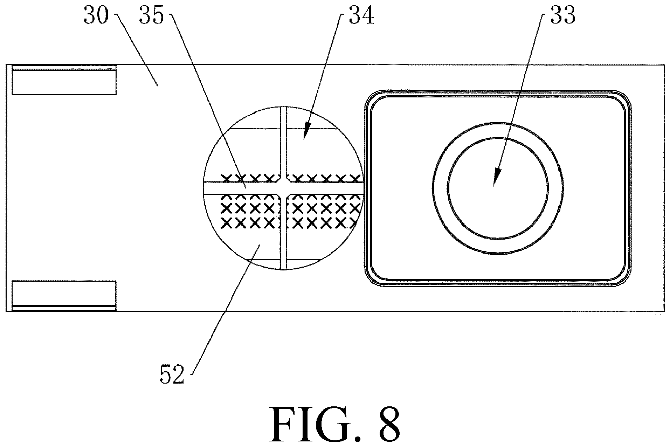

In an implementation, referring to FIGs. 2 and 8, the energy-storage apparatus 100 may further include an insulation holder 30 and an insulation adhesive film 60. The insulation holder 30 may include a first side 31 and a second side 32 opposite the first side 31. The insulation holder 30 defines a mounting hole 33. The connector is disposed at the first side 31. The terminal post extends into the mounting hole 33 from the first side 31 and extends to the second side 32. The insulation adhesive film 60 is disposed between the first connection portion 51 folded and the second connection portion 52 folded. The insulation adhesive film 60 is tightly pressed between a surface of the second connection portion 52 facing the first connection portion 51 and a surface of the first side 31 of the insulation holder 30.

Structures of the insulation holder, the terminal post 90, and the insulation adhesive film at the positive-electrode side are substantially the same as those at the negative-electrode side, respectively, and the following will illustrate the structures at the negative-electrode side.

The insulation holder 30 is made of an insulation material, and specifically a plastic material, for example, a polypropylene (PP) material. The insulation holder 30 has the first side 31 and the second side 32 opposite the first side 31. The first side 31 faces the cell 20, and the second side 32 is away from the cell 20. The insulation holder 30 is substantially in a plate shape, and a surface of the plate is substantially in a rectangular shape. The insulation holder 30 has a length, a width, and a thickness. When components are described subsequently, an extending direction of the length of the insulation holder 30 serves as a length direction, an extending direction of the width of the insulation holder 30 serves as a width direction, and an extending direction of the thickness of the insulation holder 30 serves as a thickness direction.

The insulation holder 30 at the negative-electrode side defines the mounting hole 33 and the air vent 34. The mounting hole 33 and the air vent 34 are arranged at intervals in the length direction of the insulation holder 30. The mounting hole 33 and the air vent 34 each may be a through hole penetrating through the insulation holder 30 in the thickness direction and may be a circular hole. Alternatively, the mounting hole 33 and the air vent 34 each may be a non-circular hole, such as an elliptic hole or a polygonal hole, which is not limited herein. A line connecting a geometric center of the mounting hole 33 and a geometric center of the air vent 34 may be parallel to the length direction of the insulation holder 30 or may be slightly tilted at a certain angle relative to the length direction of the insulation holder 30.

Optionally, a sidewall of the air vent 34 is connected to a grid 35. The air vent 34 is separated into multiple air vents through the grid 35. Specifically, the grid 35 may be formed by multiple strip-shaped portions, and the grid 35 may be in a shape of a Chinese character such as " 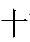 " or " 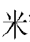 ", which is not limited herein. Divergent outer ends of the strip-shaped portions of the grid 35 are fixedly connected to the sidewall of the air vent 34. The grid 35 and the insulation holder 30 may be integrally formed, for example, formed through an integral forming process of injection molding. With the grid 35, structural strength can be enhanced and structural stability can be ensured.

The negative terminal post 40 is received in the mounting hole 33, and extends into the mounting hole 33 from the first side 31 and extends to the second side 32.

Optionally, the negative terminal post 40 includes a cylinder 41 and a connection flange 42. The cylinder 41 is connected to a middle portion of the connection flange 42. The cylinder 41 extends into the mounting hole 33 and extends to the second side 32. The connection flange 42 is disposed at the first side 31. An outer peripheral wall of the cylinder 41 may be in contact with an inner wall of the mounting hole 33. A size of the connection flange 42 is greater than that of the cylinder 41. The connection flange 42 may be attached to the surface of the first side 31 of the insulation holder 30. The connection flange 42 can limit the cylinder 41 to further extend out the second side 32. After the negative terminal post 40 is received in the mounting hole 33, the mounting hole 33 is sealed, so that gas cannot leak from the mounting hole 33, thereby ensuring sealability at an interior space of the energy-storage apparatus 100.

Optionally, a sealing ring 43 may be disposed on an outer peripheral surface of the negative terminal post 40 and/or the inner wall of the mounting hole 33, thereby achieving sealing of the negative terminal post 40 and the mounting hole 33 through the sealing ring 43.

The response member 70 is disposed at the second side 32, and gas can flow from the first side 31 to the response member 70 through the air vent 34. The response member 70 is configured to deform in response to an increase in pressure within the energy-storage apparatus 100. As such, when gas pressure inside the energy-storage apparatus 100 exceeds a preset pressure threshold, the response member 70 can deform to be in contact with a metal conductive pressing block, and thus an external short circuit may occur to a positive assembly. Furthermore, fusing-cutting may occur at the response member 70 and a bottom of the metal conductive pressing block due to a strong short-circuit current, thereby returning to an open-circuit state. In this way, the energy-storage apparatus 100 can be prevented from being overcharged and thus can be prevented from being exploded.

Specifically, the smooth aluminum piece 80 is disposed at the second side 32 of the insulation holder 30, and the smooth aluminum piece 80 and the insulation holder 30 are connected and surround a space to define a cavity. The cavity is in communication with the air vent 34, and the response member 70 is disposed on the smooth aluminum piece 80. When a gas pressure inside the energy-storage apparatus 100 exceeds the threshold due to overcharge of the cell 20, the gas can flow to the second side 32 through the air vent 34 to turn over the response member 70. After the response member 70 is turned over, the negative terminal post 40 is electrically connected to the positive terminal post 90. In this case, the energy-storage apparatus 100 is in a short-circuit state, and a charging current directly flows to the negative terminal post 40 from the positive terminal post 90 through the smooth aluminum piece 80, and may not flow into the cell 20, thereby achieving overcharge protection and improving charging security of the cell 20. When the cell 20 is normally charged and not overcharged, the response member 70 is not turned over, and the positive terminal post 90 is not directly electrically connected to the negative terminal post 40, thereby ensuring normal charging and use of the energy-storage apparatus 100.

The response member 70 is made of a metal conductive material, and may have a foldable film layer, a rib, etc. The specific structure of the response member 70 is not limited in implementations of the disclosure, and any feasible structure can be used.

The smooth aluminum piece 80 may include an explosion-proof valve 81. When a large amount of gas is generated due to thermal management abnormality in the cell 20, the explosion-proof valve 81 may be blew out due to an excessively high gas pressure and accordingly gas can leak out. With the explosion-proof valve 81, gas of high pressure can be discharged, thereby avoiding explosion or other accidents.

The insulation adhesive film 60 may include a first insulation adhesive film 61 and/or a second insulation adhesive film 62. The first insulation adhesive film 61 is attached to a first connection portion 51 of an innermost connection piece after the connector is folded, and the first insulation adhesive film 61 is disposed on a surface of the first connection portion 51 facing the second connection portion 52 after the negative connector 50 is folded. The second insulation adhesive film 62 is attached to a second connection portion 52 of the innermost connection piece after the connector is folded, and the second insulation adhesive film 62 is disposed on a surface of the second connection portion 52 facing the first connection portion 51 after the negative connector 50 is folded.

The first insulation adhesive film 61 partially covers the air vent 34 in the thickness direction of the insulation holder 30. In this way, when the negative connector 50 is unfolded, welding residue generated during welding is blocked by the first insulation adhesive film 61, thereby preventing the welding residue from falling into the air vent 34 and the cell 20. The second insulation adhesive film 62 at least partially covers the air vent 34 in the thickness direction of the insulation holder 30, which also prevents falling of the welding residue.

It can be understood that, merely the first insulation adhesive film 61 or the second insulation adhesive film 62 may be disposed, or both the first insulation adhesive film 61 and the second insulation adhesive film 62 may be disposed. No matter in which manner, it is at least ensured that gas can enter the air vent 34. That is to say, at least a gap is required to be left for the gas to enter the air vent 34 when the first insulation adhesive film 61 and the second insulation adhesive film 62 cover the air vent 34.

A color of the first insulation film 61 may be different from that of the second insulation film 62, to conveniently and quickly identify whether the setting is correct. The first insulation adhesive film 61 and the second insulation adhesive film 62 each may have an adhesive performance, and may be directly adhered to and fixed on the negative connector 50.

During assembling of the energy-storage apparatus 100, when the cover assembly covers the opening of the housing 10, the cover assembly is pressed down to be in close contact with the cell 20. With the insulation adhesive film 60, insulation between the second connection portion 52 and the response member 70 can be improved.

Specifically, during welding of the negative connector 50 to the negative tab 22 and the negative terminal post 40 and during mounting of the cover assembly to the housing 10, the second connection portion 52 and the negative tab 22 may be broken under pressure, which may generate debris. The insulation adhesive film 60 is disposed to cover part of the air vent 34, thereby avoiding the debris from entering the air vent 34 and thus avoiding a short circuit.

In addition, the insulation adhesive film 60 covers part of the air vent 34, and at least a gap is required to be defined between the insulation adhesive film 60 and the inner wall of the air vent 34, so that gas generated by the cell 20 can flow into the air vent 34 through the gap and flow to the response member 70, so that the response member 70 can be turned over to achieve overcharge protection.

In the implementation where the grid 35 is disposed, the grid 35 is tightly pressed by the insulation adhesive film 60, thereby improving connection of the insulation adhesive film 60 at the air vent 34, and blocking debris from entering the response member 70.

Since the tab is tightly pressed between two adjacent second connection portions 52, a surface of the second connection portion 52 that is close to the grid 35 and faces the grid 35 may be relatively flat, which can protect the grid 35 and prevent solder bump and the like generated during welding of the negative tab 22 to the second connection portion 52 from colliding the grid 35, thereby preventing the grid 35 from being damaged.

Similar to the function of the insulation adhesive film 60, i.e., blocking debris, a side of the second connection portion 52 close to the grid 35 can block debris from entering a side of the response member 70 through the air vent 34, thereby avoiding a short circuit. In this way, in some implementations, the insulation adhesive film 60 may not be disposed.

The grid 35 is arranged to separate the air vent 34 into multiple air vents with a reduced size, and thus relatively large debris can be prevented from passing through the air vents 34.

It can be understood that, the air vent 34 corresponds to the response member 70. Since the response member 70 is not disposed at the positive-electrode side, no air vent 34 that is the same as the air vent 34 on the insulation holder 30 at the negative-electrode side is defined on the insulation holder at the positive-electrode side, and further no grid 35 that is the same as the grid 35 on the insulation holder 30 at the negative-electrode side is disposed on the insulation holder at the positive-electrode side.

In an implementation, referring to FIGs. 4, 5, and 7, the connection piece may further include a bendable portion 53. The bendable portion 53 has two opposite ends, where one end is connected to the first connection portion 51, and another end is connected to the second connection portion 52. The bendable portion 53 is folded along a crease 54.

Specifically, in FIG. 5, a dotted line on the first connection portion 51 is aligned with an edge of the second connection portion 52, a portion of the connection piece at a side of the dotted line facing the crease 54 is the bendable portion 53, and a portion of the connection piece at a side of the dotted line away from the crease 54 is the first connection portion 51. Similarly, in conjunction with FIGs. 4 and 5, an extension line (the extension line is aligned with the dotted line on the first connection portion 51 in FIG. 5) of an edge of the second connection portion 52 facing the crease 54 also separates the second connection portion 52 from the bendable portion 53. The bendable portion 53 can be bent along the crease 54 to achieve folding of the negative connector 50. The bendable portion 53 may be symmetrical along the crease 54, or may be asymmetrical, which is not limited herein. Optionally, the first connection portion 51, the bendable portion 53, and the second connection portion 52 may be integrally formed.

With the bendable portion 53 that can be foldable along the crease 54, the connector can have a simple structure and can be folded. With the bendable portion 53 separately disposed, difficulties in processing and manufacturing as well as assembling can be reduced.

Optionally, referring to FIGs. 4 to 6, an area ratio of the first connection portion to the second connection portion ranges from 1/5 to 4/5. Specifically, the area ratio is a ratio of a total area of the first connection portion 51 to a total area of the second connection portion 52. In conjunction with FIG. 3, since the negative terminal post 40 is shorter than the negative tab 22, the area of the first connection portion 51 is set to be smaller than the area of the second connection portion 52, thereby saving materials and reducing costs. Specifically, the area ratio may be 1/5, 2/5, 3/5, 4/5, or the like, which is not limited herein.

Optionally, referring to FIGs. 4 to 6, after the connector is folded, the first connection portion 51 and the second connection portion 52 partially overlap, an area of an overlapping portion between the first connection portion 51 and the second connection portion 52 is S1, and the area of the second connection portion 52 is S2, where S1:S2=58% - 98%. In other words, for an orthographic projection of the folded first connection portion 51 toward the second connection portion 52, part of the orthographic projection may be on the second connection portion 52, and part of the orthographic projection may be located outside the second connection portion 52. The part of the projection on the second connection portion 52 overlaps the second connection portion 52, and the part of the projection located outside the second connection portion 52 does not overlap the second connection portion 52. The area S1 of the overlapping portion between the first connection portion 51 and the second connection portion 52 is smaller than the total area of the first connection portions 51. Specific values of S1 and S2 are not limited, and S1:S2 may specifically be 58%, 60%, 65%, 70%, 75%, 80%, 85%, 90%, 95%, 98%, and the like, which are not limited herein.

Optionally, a ratio of an area of the part of the projection of the first connection portion 51 on the second connection portion 52 to the total area of the first connection portion 51 ranges from 80% to 98%. As illustrated in FIG. 5, 98% of the area of the folded first connection portion 51 overlaps the second connection portion 52, the projection of the folded first connection portion 51 are fully on the second connection portion 52, and the edge of the first connection portion 51 is aligned with the edge of the second connection portion 52. Specifically, the area ratio may be 80%, 85%, 90%, 95%, 98%, and the like, which is not limited herein.

Optionally, referring to FIGs. 4 to 7, the multiple connection pieces overlap by at least 58% in a stacking direction. In the case where the multiple connection pieces are unfolded, as illustrated in FIGs. 6 and 7, for example, in the case where two connection pieces are unfolded, in FIG. 6, a shape of an upper connection piece is substantially the same as that of a lower connection piece, and for an orthographic projection of the upper connection piece toward the lower connection piece, since an area of the upper connection piece is smaller than or equal to that of the lower connection piece, the orthographic projection of the upper connection piece is fully on the lower connection piece. In conjunction with FIGs. 4 to 7, in FIG. 4, after the upper connection piece is folded, the upper connection piece is located at an inner side of the connection piece. On the one hand, since the two connection pieces both need to be folded normally, first connection portions 51 of the two connection pieces may be completely the same, and for a second connection portion 52 of the upper connection piece, since what is needed is that the second connection portion 52 of the upper connection piece can be connected to the negative tab 22, the second connection portion 52 can have a slightly reduced area. Furthermore, since the upper connection piece needs to not exceed the lower connection piece after folding to enable the upper connection piece to be located at the inner side, the lower connection piece can deform more, and the area of the upper connection piece is slightly smaller than that of the lower connection piece, so that the two connection pieces folded can be substantially aligned. Therefore, as illustrated in FIG. 6, the upper connection piece and the lower connection piece may overlap by 58%-100% in the stacking direction. Specifically, the upper connection piece and the lower connection piece may overlap by 58%, 60%, 65%, 70%, 75%, 80%, 85%, 90%, 95%, 100%, and the like, which is not limited herein.

With the ratios above, the multiple connection pieces can be in a reasonable structure and size, and the first connection portion 51 and the second connection portion 52 of each connection piece can be in a reasonable structure and size, thereby meeting requirements of electrical connection and achieving good connection.

Optionally, the bendable portion 53 has a first side-surface 531 and a second side-surface 532 opposite the first side-surface 531. Two ends of the first side-surface 531 are connected to the first connection portion 51 and the second connection portion 52, respectively, and two ends of the second side-surface 532 are connected to the first connection portion 51 and the second connection portion 52, respectively. The first side-surface 531 defines a first recess 501, and the first recess 501 is connected to the crease 54 at a deepest position of the first recess 501.

Specifically, as illustrated in FIGs. 4 and 5, after the negative connector 50 is folded, first side-surfaces 531 of the multiple connectors are substantially flush, and second side-surfaces 532 of the multiple connectors are substantially flush. Each of the first side-surface 531 and the second side-surface 532 is angled relative to a side-surface of the first connection portion 51 rather than disposed parallel to the side-surface of the first connection portion 51, so that the bendable portion 53 is relatively smooth at the bendable position. The first side-surface 531 and the second side-surface 532 each may be a flat surface, an inclined surface, an arc surface, or the like, which is not limited herein. As illustrated in FIGs. 4 and 5, each of the first side-surface 531 and the second side-surface 532 is in a shape of an outwardly convex arc. As illustrated in FIGs. 6 and 7, when the negative connector 50 is unfolded, the first recess 501 is of an inwardly concave structure.

The first recess 501 is defined on the first side-surface 531, and the first side-surface 531 is connected to the crease 54 at the deepest position of the first recess 54, so that the bendable portion 53 is relatively smooth at the bendable position. As such, in the first aspect, a folding position can be easily determined, i.e., the deepest position of the first recess 501 serves as a folding point, i.e., the first recess 501 achieves a positioning function; in the second aspect, the bendable portion 53 is relatively smooth at the bendable position of the bendable portion 53, so that components such as the cell 20 and the tab can be prevented from being scratched, thereby improving security; in the third aspect, when the cell 20 generates gas, since the bendable portion 53 is relatively smooth at the bendable position of the bendable portion 53, it facilitates gas flow and gas blocking can be reduced.

Optionally, the second side-surface 532 defines a second recess 502. The second side-surface 532 is connected to the crease 54 at a deepest position of the second recess 502. Similar to the function of the first recess, with the second recess, the effect in the foregoing three aspects can be achieved, which is not repeated herein.

Furthermore, the first recess 501 has a first sidewall 56 and a second sidewall 57 that are symmetric along the crease 54. One end of the first sidewall 56 and one end of the second sidewall 57 are connected at the crease 54, and another end of the first sidewall 56 and another end of the second sidewall 57 are connected to the first side-surface 531.

Specifically, the first sidewall 56 and the second sidewall 57 are symmetric, so that the first sidewall 56 can be flush with the second sidewall 57 after the connection piece is folded, thereby forming an integral and smooth bendable-structure.

Optionally, the second recess 502 may have a third sidewall 58 and a fourth sidewall 59 that are symmetric along the crease 54. One end of the third sidewall 58 and one end of the fourth sidewall 59 are connected at the crease 54, and another end of the third sidewall 58 and another end of the fourth sidewall 59 are connected to the second side-surface 532. In this way, a smooth bendable-structure can also be formed on the second side-surface 532.

Furthermore, the first sidewall 56 is in a shape of an outwardly convex arc towards the second sidewall 57, thereby forming a smooth bendable-structure at the bendable portion 53 after the connection piece is folded.

Optionally, the first sidewall 56 is tangent to the first side-surface 531, so that the first sidewall 56 and the first side-surface 531 are in smooth connection to form a relatively smooth bendable-structure.

In an implementation, referring to FIGs. 4 and 7, the first connection portion 51 is connected to another adjacent connection piece at an edge of the first connection portion 51 away from the bendable portion 53. Optionally, the multiple connection pieces are integrally formed, and specifically, some portions of each connection piece such as the first connection portion 51 and the second connection portion 52 of each connection pieces are integrally formed.

Specifically, referring to FIGs. 4 and 7, the multiple connection pieces may be integrally formed. For example, an edge connection portion 55 is disposed at edges of the first connection portions 51 of the multiple connection pieces away from the second connection portions 52 of the multiple connection pieces. The edge connection portion 55 may be disposed between two adjacent connection pieces. The edge connection portion 55 and the multiple connection pieces are integrally formed. The multiple connection pieces may be manufactured by a process such as cutting and folding a metal piece. The multiple connection pieces are integrally formed, and thus structural strength can be improved and additional connection members are not needed, thereby saving components and reducing costs.

Optionally, the edge connection portion 55 may also be fixedly connected to the first connection portions 51 of adjacent two connection pieces by a manner such as welding. The multiple connection pieces are connected to form an integral component, thereby facilitating management and assembling.

Referring to FIGs. 1 to 8, based on the energy-storage apparatus 100 in the foregoing implementations of the disclosure, an electricity-consumption device is further provided in implementations of the disclosure. The electricity-consumption device includes the energy-storage apparatus 100 in implementation of the disclosure. The energy-storage apparatus 100 is configured to supply power to the electricity-consumption device.

The electricity-consumption device may be an electric automobile, a power station, or the like, which is not limited herein.

By means of the energy-storage apparatus 100 in implementations of the disclosure, security and reliability can be improved.

In illustration of implementations of the disclosure, it needs to be understood that orientations or position relationships indicated by terms such as "center", "on", "under", "left", "right", "vertical", "horizontal", "in", "out", and the like are orientations or position relationships based on accompanying drawings and are only for the convenience of illustration of the specification and simplicity of illustration, rather than explicitly or implicitly indicate that apparatuses or components referred to herein must have a certain direction or be configured or operated in a certain direction and therefore cannot be understood as limitations to the disclosure.

The above implementations are only optimal implementations of the disclosure, and the above implementations cannot limit the scope of the disclosure. The ordinary skill in the field can understand all or a part of the process that realizes the above implementations of the disclosure, and equivalent changes made in accordance with the claims of the disclosure still belong to the scope of the disclosure covered.

## Claims

1. An energy-storage apparatus (100), comprising:
a terminal post;
a tab; and
a connector comprising a plurality of connection pieces, the plurality of connection pieces being in a stacked shape before and after being folded, wherein
each of the plurality of connection pieces comprises a first connection portion (51) and a second connection portion (52), and the first connection portion (51) is opposite to the second connection portion (52) after the connection piece is folded;
the first connection portion (51) is electrically connected to the terminal post, and the second connection portion (52) is electrically connected to the tab;
the tab is sandwiched between two adjacent second connection portions (52); and
each of the plurality of connection pieces satisfies at least one of: an area ratio of the first connection portion (51) to the second connection portion (52) ranges from 1/5 to 4/5; the first connection portion (51) and the second connection portion (52) partially overlap after the connector is folded, an area of an overlapping portion between the first connection portion (51) and the second connection portion (52) is S1, an area of the second connection portion (52) is S2, S1:S2 = 58% - 98%; or the plurality of connection pieces overlap by at least 58% in a stacking direction;
each of the plurality of connection pieces further comprises a bendable portion (53), wherein one end of the bendable portion (53) is connected to the first connection portion (51), another end of the bendable portion (53) is connected to the second connection portion (52), and the bendable portion (53) is foldable along a crease (54); and
the bendable portion (53) has a first side-surface (531) and a second side-surface (532) opposite the first side-surface (531), wherein two ends of the first side-surface (531) are connected to the first connection portion (51) and the second connection portion (52), respectively, two ends of the second side-surface (532) are connected to the first connection portion (51) and the second connection portion (52), respectively, and the first side-surface (531) and the second side-surface (532) are flush with each other and both in a shape of an outwardly convex arc after the connector is folded.

2. The energy-storage apparatus (100) of claim 1, wherein the first side-surface (531) defines a first recess (501), and the first side-surface (531) is connected to the crease (54) at a deepest position of the first recess (501).

3. The energy-storage apparatus (100) of claim 2, wherein the first recess (501) has a first sidewall (56) and a second sidewall (57) that are symmetric along the crease (54), wherein one end of the first sidewall (56) and one end of the second sidewall (57) are connected at the crease (54), and another end of the first sidewall (56) and another end of the second sidewall (57) are connected to the first side-surface (531).

4. The energy-storage apparatus (100) of claim 3, wherein the first sidewall (56) is in a shape of an outwardly convex arc towards the second sidewall (57).

5. The energy-storage apparatus (100) of any of claims 3 and 4, wherein the first sidewall (56) is tangent to the first side-surface (531).

6. The energy-storage apparatus (100) of any of claims 1-5, wherein the second side-surface (532) defines a second recess (502), wherein the second side-surface (532) is connected to the crease (54) at a deepest position of the second recess (502).

7. The energy-storage apparatus (100) of any of claims 1-6, wherein the first connection portion (51) is connected to another adjacent connection piece at an edge of the first connection portion (51) away from the bendable portion (53).

8. The energy-storage apparatus (100) of any of claims 1-7, wherein each of the plurality of connection pieces satisfies at least one of: two adjacent edges of the first connection portion (51) are in smooth transition connection; or two adjacent edges of the second connection portion (52) are in smooth transition connection.

9. The energy-storage apparatus (100) of any one of claims 1 to 8, further comprising an insulation holder (30) and an insulation adhesive film (60), wherein the insulation holder (30) comprises a first side (31) and a second side (32) opposite the first side (31), the insulation holder (30) defines a mounting hole (33), the connector is disposed at the first side (31), the terminal post extends into the mounting hole (33) from the first side (31) and extends to the second side (32), the insulation adhesive film (60) is disposed between the first connection portion (51) folded and the second connection portion (52) folded, and the insulation adhesive film (60) is tightly pressed between a surface of the second connection portion (52) facing the first connection portion (51) and a surface of the first side (31) of the insulation holder (30).

10. The energy-storage apparatus (100) of claim 9, wherein the insulation holder (30) further defines an air vent (34), the mounting hole (33) and the air vent (34) are arranged at intervals in a length direction of the insulation holder (30), and the insulation adhesive film (60) partially covers the air vent (34).

11. The energy-storage apparatus (100) of claim 10, wherein a grid (35) is disposed at a sidewall of the air vent (34), the air vent (34) is separated into a plurality of air vents through the grid (35), and the grid (35) is tightly pressed by the insulation adhesive film (60).

12. An electricity-consumption device, comprising the energy-storage apparatus (100) of any one of claims 1 to 11, the energy-storage apparatus (100) being configured to supply power to the electricity-consumption device.
